# EUROPÄISCHE PATENTSCHRIFT

(11) **EP 1 101 791 B1**
(45) Veröffentlichungstag und Bekanntmachung des Hinweises auf die Patenterteilung: **27.10.2004**
(21) Anmeldenummer: 00121722.3
(22) Anmeldetag: 05.10.2000
(51) Int. Cl.: C08J 9/14

(54) **Treibmittelzusammensetzung zur Herstellung von Schaumstoffplatten**
Blowing agents composition for producing foam sheets
Composition d'agents d'expansion pour la fabrication de plaques de mousse

(30) Priorität: 17.11.1999 DE 19955146
(43) Veröffentlichungstag der Anmeldung: 23.05.2001
(73) Patentinhaber: BASF AKTIENGESELLSCHAFT, 67056 Ludwigshafen (DE)
(72) Erfinder: Dietzen, Franz-Josef, Dr., 67071 Ludwigshafen (DE); Ehrmann, Gerd, Dr., 67146 Deidesheim (DE); Turznik, Gerhard, Dr., 67269 Grünstadt (DE); Alicke, Gerhard, 67549 Worms (DE); Hahn, Klaus, Dr., 67281 Kirchheim (DE)

(56) Entgegenhaltungen:
- EP-A- 0 464 581
- SE-C- 504 632

## Beschreibung

Die Erfindung betrifft ein Verfahren zur Herstellung von Schaumstoffplatten mit einer Dichte von 20 bis 200 g·l⁻¹ und einem Querschnitt von mindestens 50 cm² auf Basis von Styrolpolymerisaten.

Extrudierte Polystyrol-Schaumstoffe (XPS) werden in großem Maß zum Isolieren von Gebäuden und Gebäudeteilen eingesetzt. Für diesen Anwendungszweck müssen die Schaumstoffplatten eine möglichst niedrige Wärmeleitfähigkeit aufweisen. Neuerdings werden aus Umweltschutzgründen zur Herstellung von XPS-Platten chlorfreie Treibmittel eingesetzt. Die EP-A 427 533 beschreibt die Herstellung von XPS-Platten unter Verwendung von 1,1,1,2-Tetrafuorethan (134a), gegebenenfalls zusammen mit anderen Treibmitteln, wie CO₂, H₂O und C₁-C₄-Kohlenwasserstoffen. 134a verbleibt sehr lange im Schaumstoff, was gute Wärmeisoliereigenschaften (niedrige λ-Werte) zur Folge hat. Es hat aber den Nachteil, daß es zur Bildung von offenzelligen Schäumen führt, und daß wegen seiner stark nucleierenden Wirkung nur sehr feinzellige Schäume mit erhöhter Dichte herstellbar sind.

In der EP-A 464 581 sind Treibmittelmischungen aus Ethanol, CO₂ und gegebenenfalls weiteren Treibmitteln, u.a. auch 134a beschrieben. CO₂ als Treibmittel hat aber den Nachteil, daß wegen seiner geringen Löslichkeit in der Polystyrolschmelze beim Extrudieren sehr hohe Drücke angewandt werden müssen. Deshalb muß mit kleinen Düsenspaltweiten gearbeitet werden, was zu relativ geringen Plattendicken führt. Außerdem hat CO₂ auch eine stark nucleierende Wirkung, so daß eine Treibmittelkombination mit CO₂ und 134a zu extrem feinzelligen Schäumen mit hoher Dichte und geringer Dicke führt. Die US-A 5,557,896 beschreibt XPS-Schaumstoffe mit 30 bis 80 % offenen Zellen. Als Treibmittel sind verschiedene Halogenkohlenwasserstoffe, u.a. auch 134a, und andere flüchtige Treibmittel, u.a. auch Ethanol, genannt. Bevorzugt ist ein Gemisch aus Ethylchlorid und CO₂.

SE-C'-504632 offenbart die Herstellung von hochisolierendem Polystyrol-Schaum in Gegenwart von Treibmitteln aus Chlor-freien, halogenierten Kohlenwasserstoffen (z.B 134a), Alkohol und Wasser.

Der Erfindung lag die Aufgabe zugrunde, geschlossenzellige XPS-Schaumstoffplatten mit niedriger Dichte und guten Wärmeisoliereigenschaften bereitzustellen.

Diese Aufgabe wird gelöst, wenn man bei der Herstellung von Schaumstoffplatten mit einer Dichte vom 20 bis 200 g·l⁻¹ und einem Querschnitt von mindestens 50 cm² durch Extrudieren und Verschäumen einer Mischung aus einem Styrolpolymerisat, 3 bis 15 Gew.-% eines flüchtigen Treibmittels, bezogen auf das Styrolpolymerisat, sowie ggf. üblichen Zusatzstoffen, als flüchtiges Treibmittel ein Gemisch einsetzt aus
95 bis 40 Gew.-% 1,1,1,2-Tetrafluorethan,
5 bis 60 Gew.-% Ethanol und
0 bis 30 Gew.-% anderer Fluorkohlenwasserstoffe.

Styrolpolymerisate im Sinne dieser Erfindung sind Polystyrol und Mischpolymerisate des Styrols, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat.

Zweckmäßigerweise werden bei der XPS-Herstellung Flammschutzmittel zugesetzt, vorzugsweise 0,5 bis 5 Gew.-% organische Bromverbindungen mit einem Bromgehalt von mehr als 70 %, wie z.B. Hexabromcyclododecan, vorzugsweise zusammen mit 0,1 bis 0,5 Gew.-% einer C-C- oder O-O-labilen organischen Verbindung, wie Dicumylperoxid oder bevorzugt Dicumyl.

Als weitere übliche Zusatz- und/oder Hilfsstoffe können der Polystyrolmatrix Antistatika, Stabilisatoren, Farbstoffe, Füllstoffe und Keimbildner, sowie Mittel zur Erniedrigung der Wärmeleitfähigkeit, wie z.B. Ruß oder Graphit, in üblichen Mengen zugesetzt werden.

Als Treibmittel werden 3 bis 15, vorzugsweise 4 bis 12 Gew.-%, bezogen auf das Styrolpolymerisat, eines Gemisches eingesetzt aus
95 bis 40, vorzugsweise 90 bis 50 Gew.-% 134a
5 bis 60, vorzugsweise 10 bis 50 Gew.-% Ethanol und
0 bis 30, vorzugsweise 0 bis 20 Gew.-% anderer Fluorkohlenwasserstoffe, zum Beispiel 1,1-Difluorethan (152a) oder 1,1,1-Trifluorethan.

Die erfindungsgemäß hergestellten Schaumstoffplatten haben eine Dichte von 20 bis 200 g·l⁻¹, vorzugsweise von 30 bis 60 g·l⁻¹. Sie enthalten vorzugsweise weniger als 20 %, insbesondere weniger als 10 % offene Zellen.

Die in den Beispielen genannten Prozente beziehen sich auf das Gewicht.

### Beispiele

Die Schaumstoffproben wurden auf einer Tandemanlage extrudiert. Diese besteht aus einem Doppelschneckenextruder ZKS53 und einem Einschneckenkühlextruder (KE 90). Polymer und Zusatzstoffe wurden dem Doppelschneckenextruder zugeführt. Das Polymere wurde bei 200°C aufgeschmolzen und die Mischung der Treibmittel wurde gemeinsam an einem Punkt eingespritzt. Die treibmittelhaltige Schmelze wurde dann im zweiten Extruder auf die zum Schäumen notwendige Temperatur von 120-135°C abgekühlt. Der Durchsatz betrug 60 kg/h, die Düse hatte eine Breite von 70 mm und 1,5 mm Düsenspalthöhe. Treibmittelzusammensetzung und Ergebnis siehe Tabelle.

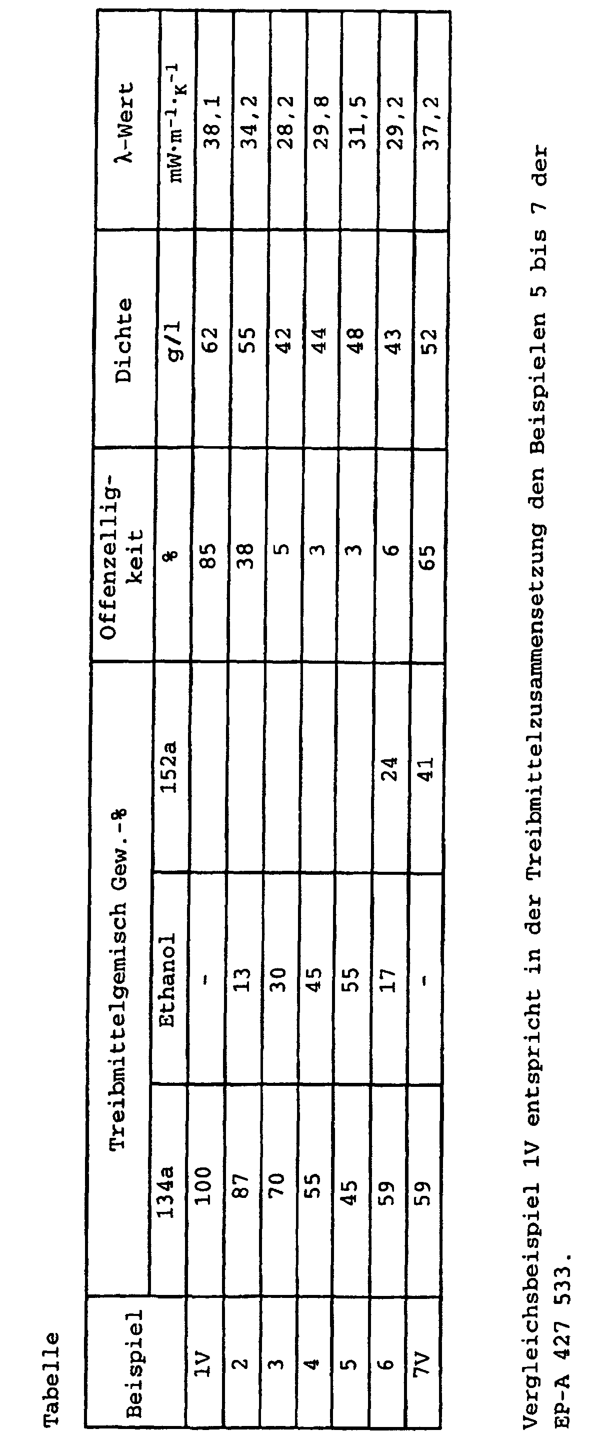

## Patentansprüche

1. Verfahren zur Herstellung von Schaumstoffplatten mit einer Dichte vom 20 bis 200 g·l⁻¹ und einem Querschnitt von mindestens 50 cm² durch Extrudieren und Verschäumen einer Mischung aus einem Styrolpolymerisat, 3 bis 15 Gew.-% eines flüchtigen Treibmittels, bezogen auf das Styrolpolymerisat, sowie ggf. üblichen Zusatzstoffen, **dadurch gekennzeichnet, daß** das flüchtige Treibmittel ein Gemisch ist, welches besteht aus:
95 bis 40 Gew.-% 1,1,1,2-Tetrafluorethan,
5 bis 60 Gew.-% Ethanol, sowie gegebenenfalls
0 bis 30 Gew.-% anderer Fluorkohlenwasserstoffe.

2. Verfahren nach Anspruch 1, **dadurch gekennzeichnet, daß** die Schaumstoffplatten weniger als 20 % offene Zellen aufweisen.

3. Schaumstoffplatten, hergestellt nach Anspruch 1.

## Claims

1. A process for producing foam boards having a density of from 20 to 200 g·l⁻¹ and a cross section of at least 50 cm² by extruding and foaming a mixture of a styrene polymer, from 3 to 15% by weight of a volatile blowing agent, based on the styrene polymer, and, if desired, customary additives, wherein the volatile blowing agent is a mixture comprising from 95 to 40% by weight of 1,1,1,2-tetrafluorethane, from 5 to 60% by weight of ethanol, and, if desired, from 0 to 30% by weight of other fluorinated hydrocarbons.

2. A process as claimed in claim 1, wherein the foam boards have less than 20% open cells.

3. A foam board produced as claimed in claim 1.

## Revendications

1. Procédé de préparation de plaques de mousse d'une masse volumique de 20 à 200 g/l⁻¹ et d'une section transversale d'au moins 50 cm², par extrusion et expansion d'un mélange constitué d'un polymère de styrène, de 3 à 15% en poids, par rapport au polymère de styrène, d'un agent porogène volatil, ainsi qu'éventuellement d'autres additifs, **caractérisé en ce que** l'agent porogène volatil est un mélange constitué de:
95 à 40% en poids de 1,1,1,2-tétrafluoroéthane,
5 à 60% en poids d'éthanol, ainsi qu'éventuellement
0 à 30% en poids d'autres hydrocarbures fluorés.

2. Procédé selon la revendication 1, **caractérisé en ce que** les plaques de mousse présentent moins de 20% d'alvéoles ouvertes.

3. Plaques de mousse préparées selon la revendication 1.
